# EUROPEAN PATENT APPLICATION

(11) **EP 4 692 588 A1**
(43) Date of publication of application: **11.02.2026**
(21) Application number: 24777941.6
(22) Date of filing: 22.03.2024
(51) Int. Cl.: F16F 9/19, F16F 9/34

(54) **DAMPER MECHANISM, POSITIONING VALVE CORE FOR DAMPER MECHANISM, AND SHOCK ABSORBER**

(30) Priority: 28.03.2023 CN 202310316462; 28.03.2023 CN 202320646707 U; 28.03.2023 CN 202320647039 U
(71) Applicant: Lanxun Auto Air Suspension System (Chuzhou) Co., Ltd., Chuzhou, Anhui 239064 (CN)
(72) Inventor: JIA, Dehuai, Chuzhou, Anhui 239064 (CN); DAI, James, Chuzhou, Anhui 239064 (CN); LUO, Xiang, Chuzhou, Anhui 239064 (CN)
(74) Representative: EIP
(86) International application number: PCT/CN2024/083424
(87) International publication number: WO 2024/199152

(57) **Abstract**

Provided are a damper mechanism and a shock absorber using the damper mechanism. The damper mechanism (01) comprises a first sleeve (100), a second sleeve (200), a coil fixing base (103), and a solenoid valve control portion (104); the coil fixing base and the solenoid valve control portion are located in the first sleeve; the solenoid valve control portion comprises a housing (1041), a valve cover (1042), and a valve armature (1044); the housing and the valve cover define an accommodating cavity (1043); the housing is provided with a first channel (301) communicated with the accommodating cavity; the coil fixing base is provided with a second channel (302) communicated with the first channel; the first sleeve is provided with a third channel (303) communicated with the second channel; and the first channel, the second channel, and the third channel are sequentially communicated to form an exhaust channel (30). The damper mechanism facilitates discharge of gas from the accommodating cavity, so that the damper mechanism has good performance.

## Description

The present application claims the priority of the Chinese patent applications No. 202310316462.3, No. 202320647039.7 and No. 202320646707.4, all filed on March 29, 2023, the disclosure of which is incorporated herein by reference in its entirety as part of the present application.

### TECHNICAL FIELD

At least one embodiment of the present disclosure relates to a damper mechanism, a positioning valve core for a damper mechanism, and a shock absorber.

### BACKGROUND

With the rapid development of the automotive industry and continuous improvement in people's living standards, demands for vehicle ride comfort are increasing. The shock absorber in an automobile suspension system can reduce vibrations of the frame and body, thereby improving the smoothness of vehicle operation.

Currently, the damper mechanism can be connected to the piston rod of a shock absorber in a vehicle. The damper mechanism includes a rod body and a piston connected to the piston rod, with the piston dividing the rod body into a working chamber at a side where the piston rod is located and a working chamber at a side away from the piston rod. These two working chambers are filled with a damping medium.

### SUMMARY

At least one embodiment of the present disclosure provides a damper mechanism, including: a first sleeve, including a first opening and an annular wall arranged opposite to the first opening; a second sleeve, including a second opening and a third opening arranged opposite to each other, the second opening and a portion of the second sleeve close to the second opening extending through the first opening into the first sleeve; coil holder, located within the first sleeve; a solenoid valve control part, located within the first sleeve and located on a side of the coil holder close to the first opening, wherein the solenoid valve control part includes a housing, a valve cover, and a valve armature, the housing is located on a side of the valve cover facing the annular wall, the housing and the valve cover defines an accommodating chamber, the valve armature is arranged in the accommodating chamber and configured to reciprocate along a first direction within the accommodating chamber, the first direction is an axial direction of the first sleeve or the second sleeve; wherein the housing is provided with a first passage in communication with the accommodating chamber, the coil holder is provided with a second passage in communication with the first passage, the first sleeve is provided with a third passage in communication with the second passage, and the first passage, the second passage, and the third passage are sequentially connected to form an exhaust passage.

For example, according to the damper mechanism provided by at least one embodiment of the present disclosure, the accommodating chamber includes a sub-chamber located on a side of the valve armature away from the valve cover, the first passage is in direct communication with the sub-chamber.

For example, according to the damper mechanism provided by at least one embodiment of the present disclosure, in the first direction, the first passage, the second passage, and the third passage are located on a side of the valve armature away from the valve cover

For example, according to the damper mechanism provided by at least one embodiment of the present disclosure, the exhaust passage further includes a retraction part, and any one of an inner diameter of the first passage, an inner diameter of the second passage, and an inner diameter of the third passage is greater than an inner diameter of the retraction part.

For example, according to the damper mechanism provided by at least one embodiment of the present disclosure, the inner diameter of the retraction part is in a range from 0.25 mm to 0.35 mm.

For example, according to the damper mechanism provided by at least one embodiment of the present disclosure, the retraction part is located between the first passage and the second passage, an end of the retraction part is in communication with an end of the first passage away from the solenoid valve control part, and the other end of the retraction part is in communication with an end of the second passage close to the solenoid valve control part.

For example, according to the damper mechanism provided by at least one embodiment of the present disclosure, further including an electromagnetic coil, wherein the electromagnetic coil is located between an outer sidewall of the housing and an inner sidewall of the first sleeve and configured to drive the valve armature to reciprocate along the first direction within the accommodating chamber; wherein the first passage is located on a side of the valve armature away from the second sleeve, and both the second passage and the third passage are located on a side of the electromagnetic coil away from the second sleeve.

For example, according to the damper mechanism provided by at least one embodiment of the present disclosure, a first included angle between a central axis of the first passage and the first direction is in a range from 20° to 65°; and/or an angle between a central axis of the second passage and the first direction is in a range from 5° to 90°; and/or an angle between a central axis of the third passage and the first direction is in a range from 5° to 90°.

For example, according to the damper mechanism provided by at least one embodiment of the present disclosure, the damper mechanism includes a plurality of exhaust passages, and ports of the plurality of exhaust passages away from the solenoid valve control part are spaced apart on an outer wall of the first sleeve.

For example, according to the damper mechanism provided by at least one embodiment of the present disclosure, a first sealing member is arranged between the housing and the coil holder, and the first sealing member surrounds the first passage; a second sealing member is arranged between the coil holder and the first sleeve, and the second sealing member surrounds the second passage.

For example, according to the damper mechanism provided by at least one embodiment of the present disclosure, at least one of surfaces of the housing and the coil holder mutually adjacent to each other is provided with a first groove, the first sealing member is located in the first groove; at least one of surfaces of the coil holder and the first sleeve mutually adjacent to each other is provided with a second groove, the second sealing member is located in the second groove.

For example, according to the damper mechanism provided by at least one embodiment of the present disclosure, further including a valve core assembly chamber located within the second sleeve and a positioning valve core located within the valve core assembly chamber, wherein the positioning valve core is connected to the solenoid valve control part, the solenoid valve control part further includes a rod body penetrating through the valve armature, the rod body is configured to transmit a regulating force from the valve armature to the positioning valve core, wherein the valve armature includes an internal passage, the internal passage penetrates through the valve armature in the first direction, and the internal passage is in communication with the accommodating chamber.

For example, according to the damper mechanism provided by at least one embodiment of the present disclosure, a guide sleeve is arranged at an end of the accommodating chamber away from the second sleeve, at least a portion of the rod body close to the annular wall is located in the guide sleeve, wherein the solenoid valve control part further includes a first elastic element, the first elastic element is located between the guide sleeve and the valve armature.

For example, according to the damper mechanism provided by at least one embodiment of the present disclosure, further including an annular bracket, wherein at least a portion of the annular bracket is located on the periphery of the housing and the valve cover, and a sealing ring is arranged between the outer periphery of the annular bracket and an inner sidewall of the first sleeve; at a side of the sealing ring away from the annular wall, at least one annular portion of a part where an outer sidewall of the second sleeve and an inner sidewall of the first sleeve face each other is sealed, and a sidewall of the first sleeve between the sealing ring and the annular portion is closed.

For example, according to the damper mechanism provided by at least one embodiment of the present disclosure, further including a positioning valve core and a movable valve core for the damper mechanism,, wherein the solenoid valve control part includes a rod body penetrating through the valve armature, and an end of the positioning valve core is connected to the rod body; the movable valve core is located on a side of the positioning valve core away from the rod body, and the positioning valve core is configured to transmit a regulating force from the valve armature to the movable valve core through the rod body.

For example, according to the damper mechanism provided by at least one embodiment of the present disclosure, the positioning valve core includes: a positioning seat, including a main body part in disc shape and an extending part in column shape, wherein the extending part is connected to a side of the main body part, and an axis of the main body part coincides with an axis of the extending part, the positioning seat further includes a fourth passage extending in a direction of the axis and penetrating through the main body part and the extending part; a positioning valve plate, located on a side of the main body part away from the extending part, wherein an edge portion of the positioning valve plate is in contact with the main body part, and a central portion of the positioning valve plate includes a first protruding part bulging in a direction away from the extending part, a first chamber is provided between the positioning valve plate and the main body part, the main body part is provided with a fifth passage, and the fifth passage and the fourth passage are communicated through the first chamber or directly communicated, and the fifth passage is in communication with outside of the positioning valve core.

For example, according to the damper mechanism provided by at least one embodiment of the present disclosure, a distance between the positioning valve plate and the main body part in the direction of the axis gradually decreases in a direction from the central portion to an edge of the positioning valve plate.

For example, according to the damper mechanism provided by at least one embodiment of the present disclosure, the fifth passage penetrates through the main body part in a direction parallel to the direction of the axis and is spaced apart from the fourth passage in a radial direction of the main body part, and a side of the main body part away from the positioning valve plate is in communication with the first chamber through the fifth passage.

For example, according to the damper mechanism provided by at least one embodiment of the present disclosure, the fifth passage includes a third groove arranged on a surface of the main body part close to the first chamber, the third groove extends in a radial direction of the main body part and is in communication with the fourth passage, at least an end of the third groove away from the fourth passage is in communication with outside of the positioning seat.

For example, according to the damper mechanism provided by at least one embodiment of the present disclosure, the periphery of the main body part includes an edge part protruding in a direction away from the extending part along the direction of the axis, and an end of the third groove away from the fourth passage is in communication with the outside of the positioning seat through a gap between the edge part and the positioning valve plate.

For example, according to the damper mechanism provided by at least one embodiment of the present disclosure, a cross-sectional area of the fifth passage is smaller than a cross-sectional area of the fourth passage.

For example, according to the damper mechanism provided by at least one embodiment of the present disclosure, the movable valve core includes a first recess chamber, and at least a portion of the first protruding part of the positioning valve plate is located in the first recess chamber.

For example, according to the damper mechanism provided by at least one embodiment of the present disclosure, an end of the rod body close to the movable valve core includes a second recess chamber, and at least a portion of the extending part of the positioning valve core is located in the second recess chamber.

For example, according to the damper mechanism provided by at least one embodiment of the present disclosure, an axis of the rod body, the axis of the extending part, and an axis of the movable valve core coincide.

For example, according to the damper mechanism provided by at least one embodiment of the present disclosure, further including: a guide sleeve, located on a side of the valve armature away from the positioning valve core; a movable valve limiter, located on a side of the movable valve core away from the positioning valve core; a first elastic element, abutting against the guide sleeve and the valve armature, respectively; and a second elastic element, abutting against the movable valve limiter and the movable valve core, respectively.

For example, according to the damper mechanism provided by at least one embodiment of the present disclosure, no elastic element is arranged between the valve armature and the positioning valve core in the direction of the axis of the extending part of the positioning seat.

For example, according to the damper mechanism provided by at least one embodiment of the present disclosure, an elastic coefficient of the first elastic element is smaller than an elastic coefficient of the second elastic element.

At least one embodiment of the present disclosure provides a shock absorber, including the damper mechanism according to any one of the above.

One object of the present disclosure is to improve the exhaust characteristics of a positioning valve core for a damper mechanism and simplify the structure of the positioning valve core. According to the embodiments of the present disclosure, by arranging a fifth passage which is communicated with outside of the positioning valve core, when the positioning valve core and components in the damper mechanism are installed and matched, it is beneficial to exhaust gas between the positioning valve core and the components installed and matched with the positioning valve core to the outside of the positioning valve core through the fifth passage, and the positioning valve core has a simple structure and is beneficial to manufacturing.

At least one embodiment of the present disclosure further provides a positioning valve core for a damper mechanism, including: a positioning seat, including a main body part in disc shape and an extending part in column shape, wherein the extending part is connected to a side of the main body part, and an axis of the main body part coincides with an axis of the extending part, the positioning seat further includes a fourth passage extending in a direction of the axis and penetrating through the main body part and the extending part; a positioning valve plate, located on a side of the main body part away from the extending part, wherein an edge portion of the positioning valve plate is in contact with the main body part, and a central portion of the positioning valve plate includes a first protruding part bulging in a direction away from the extending part, a first chamber is provided between the positioning valve plate and the main body part, the main body part is provided with a fifth passage, and the fifth passage and the fourth passage are communicated through the first chamber or directly communicated, and the fifth passage is in communication with outside of the positioning valve core.

For example, according to the positioning valve core for the damper mechanism provided by at least one embodiment of the present disclosure, a distance between the positioning valve plate and the main body part in the direction of the axis gradually decreases in the direction of the axis from the central portion to an edge of the positioning valve plate.

For example, according to the positioning valve core for the damper mechanism provided by at least one embodiment of the present disclosure, the fifth passage penetrates through the main body part in a direction parallel to the direction of the axis and is spaced apart from the fourth passage in a radial direction of the main body part, and a side of the main body part away from the positioning valve plate is in communication with the first chamber through the fifth passage.

For example, according to the positioning valve core for the damper mechanism provided by at least one embodiment of the present disclosure, the fifth passage includes a third groove arranged on a surface of the main body part close to the first chamber, the third groove extends in a radial direction of the main body part and is in communication with the fourth passage, at least an end of the third groove away from the fourth passage is in communication with outside of the positioning seat.

For example, according to the positioning valve core for the damper mechanism provided by at least one embodiment of the present disclosure, the periphery of the main body part includes an edge part protruding in a direction away from the extending part along the direction of the axis, and an end of the third groove away from the fourth passage is in communication with the outside of the positioning seat through a gap between the edge part and the positioning valve plate.

For example, according to the positioning valve core for the damper mechanism provided by at least one embodiment of the present disclosure, a cross-sectional area of the fifth passage is smaller than a cross-sectional area of the fourth passage.

### BRIEF DESCRIPTION OF DRAWINGS

In order to clearly illustrate the technical solution of the embodiments of the present disclosure, the drawings of the embodiments will be briefly described. It is obvious that the described drawings in the following are only related to some embodiments of the present disclosure and thus are not construed as any limitation to the present disclosure
FIG. 1 is a damper mechanism provided according to an example of an embodiment of the present disclosure;
FIG. 2 is an enlarged partial schematic view of the damper mechanism shown in FIG. 1;
FIG. 3 is a schematic block diagram of a shock absorber according to an embodiment of the present disclosure;
FIG. 4 is a schematic cross-sectional view of a positioning valve core for a damper mechanism provided by an embodiment of the present disclosure;
FIG. 5 is a top view of the positioning valve core of FIG. 4;
FIG. 6 is a schematic cross-sectional view of a positioning seat of the positioning valve core of FIG. 4;
FIG. 7 is a schematic cross-sectional view of another positioning valve core for a damper mechanism according to an embodiment of the present disclosure;
FIG. 8 is a top view of the positioning valve core of FIG. 7;
FIG. 9 is a schematic cross-sectional view of a positioning seat of the positioning valve core of FIG. 7;
FIG. 10 is a schematic view of another damper mechanism provided by an embodiment of the present disclosure; and
FIG. 11 is a schematic diagram of another shock absorber provided according to an embodiment of the present disclosure.

### DETAILED DESCRIPTION

In order to make objectives, technical details, and advantages of the embodiments of the present disclosure clearer, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

Unless otherwise defined, all the technical and scientific terms used herein have the same meanings as commonly understood by one of ordinary skill in the art to which the present disclosure belongs. The terms "first", "second", etc., which are used in the present disclosure, are not intended to indicate any sequence, amount or importance, but distinguish various components. Also, the terms "including," "comprising," etc., are intended to specify that the elements or the objects stated before these terms encompass the elements or the objects and equivalents thereof listed after these terms, but do not preclude the other elements or objects. The phrases "connected", "connecting", etc., are not intended to define a physical connection or mechanical connection, but may include an electrical connection, directly or indirectly. The terms "up," "down," "left," "right," and the like, are used to indicate relative positional relationships, which may change accordingly when the absolute position of the described object changes.

Currently, the working principle of a hydraulic telescopic shock absorber is that when relative motion occurs between the vehicle frame and axle due to vibration, the piston rod inside the shock absorber moves up and down, causing the oil within the shock absorber chamber to repeatedly flow from one chamber to another. This converts the kinetic energy generated by the relative motion between the piston rod assembly and the cylinder assembly of the shock absorber into thermal energy of the oil, which is then dissipated outward, thereby providing a damping effect.

In research, the inventors of the present disclosure have found that: during the operation of the shock absorber, part of the oil within the shock absorber chamber may foam during flow, thereby disrupting the uniformity of the medium flowing within the shock absorber chamber; on the other hand, gas generated within the shock absorber chamber may cause a sudden increase in internal pressure, leading to unstable operation of the shock absorber system and resulting in degraded shock absorber performance. In some products, designs have been adopted in which an exhaust passage is provided in the middle or lower portion of the damper mechanism of the shock absorber. However, depending on how the damper mechanism is arranged within the shock absorber, and due to the lower density of gas compared to liquid, gas tends to accumulate at or flow toward the upper portion of the damper mechanism. Existing designs are not well adapted to the flow direction of the gas and thus cannot effectively vent it. Therefore, there is an urgent need to propose a design that facilitates better exhaust of internal gas from the shock absorber to improve its operational performance.

Embodiments of the present disclosure provide a damper mechanism and a shock absorber.

The damper mechanism provided by embodiments of the present disclosure includes a first sleeve, a second sleeve, a coil holder, and a solenoid valve control part. The second sleeve includes a second opening and a third opening arranged opposite to each other. The second opening and a portion of the second sleeve close to the second opening extend through the first opening into the interior of the first sleeve; the coil holder is located within the first sleeve; a solenoid valve control part, located within the first sleeve and located on a side of the coil holder close to the first opening, the solenoid valve control part including a housing, a valve cover, and a valve armature, the housing being located on a side of the valve cover facing the annular wall, the housing and the valve cover defining an accommodating chamber, the valve armature being disposed in the accommodating chamber and configured to reciprocate along a first direction therein, the first direction being an axial direction of the first sleeve or the second sleeve; the housing is provided with a first passage in communication with the accommodating chamber, the coil holder is provided with a second passage in communication with the first passage, the first sleeve is provided with a third passage in communication with the second passage, and the first passage, the second passage and the third passage are sequentially connected to form an exhaust passage.

The embodiment of the present disclosure provides a damper mechanism, in which a first passage provided in a housing, a second passage provided in a coil holder, and a third passage provided in a first sleeve are sequentially connected to form an exhaust passage, facilitating the discharge of gas from the accommodating chamber of the damper mechanism. The design of the exhaust passage is combined with the gas flow trend, resulting in high exhaust efficiency and effectively improving the operating performance of the damper mechanism.

A damper mechanism provided by an embodiment of the present disclosure will now be described with reference to the accompanying drawings.

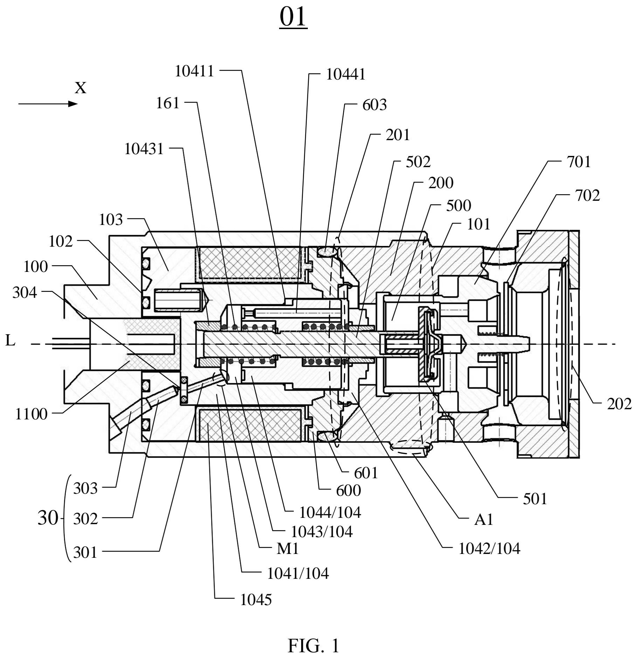

FIG. 1 is a damper mechanism provided according to an example of an embodiment of the present disclosure. As shown in FIG. 1, the damper mechanism 01 includes a first sleeve 100, a second sleeve 200, and a solenoid valve control part 104. The first sleeve 100 includes a first opening 101 and an annular wall 102 arranged opposite to the first opening 101. The second sleeve 200 includes a second opening 201 and a third opening 202 arranged opposite to each other. The second opening 201and a portion of the second sleeve 200 close to the second opening 201 extend through the first opening 101 into the first sleeve 100.

As shown in FIG. 1, a coil holder 103 is located within the first sleeve 100. The solenoid valve control part 104 is located inside the first sleeve 100, and at a side of the coil holder 103 close to the first opening 101. The solenoid valve control part 104 includes a housing 1041, a valve cover 1042, and a valve armature 1044, with the housing 1041 located on a side of the valve cover 1042 facing the annular wall 102. The housing 1041 and the valve cover 1042 define an accommodating chamber 1043, in which the valve armature 1044 is disposed and configured to reciprocate along a first direction X within the accommodating chamber 1043.

As shown in FIG. 1, the damper mechanism 01 further includes an electromagnetic coil 1045, the electromagnetic coil 1045 is located between an outer sidewall of the housing 1041 and an inner sidewall of the first sleeve 100. For example, the electromagnetic coil 1045 is located on a side of the coil holder 103 close to the valve cover 1042 and is in contact with the coil holder 103. The electromagnetic coil 1045 is configured to drive the valve armature 1044 to reciprocate along the first direction X within the accommodating chamber 1043.

For example, the first opening 101 may be an opening surrounded by an end of the first sleeve 100 away from the annular wall 102. For example, the inner periphery of the annular wall 102 surrounds an opening. The opening in the annular wall 102 may be used for lead-out of a wire connected to the solenoid valve control part.

For example, a planar shape of the annular wall 102 may be an annular plane, and a straight line perpendicular to this annular plane may pass through both the first opening 101 and the opening surrounded by the annular wall 102.

For example, a shape of the first opening 101 may be circular, the planar shape of the annular wall 102 may be annular, a planar shape of the inner periphery of the annular wall 102 may be circular, and a diameter of the first opening 101 is greater than a diameter of the inner periphery of the annular wall 102. For example, a central axis of the annular wall 102 passes through a center of the first opening 101.

For example, as shown in FIG. 1, the second opening 201 may be an opening surrounded by an end of the second sleeve 200 at a side facing the annular wall 102 of the first sleeve 100, and the third opening 202 may be an opening surrounded by an end of the second sleeve 200 at a side away from the annular wall 102 of the first sleeve 100.

For example, as shown in FIG. 1, an aperture of the second opening 201 is smaller than an aperture of the first opening 101. For example, the second opening 201 of the second sleeve 200 may extend into a tubular chamber between the first opening 101 and the annular wall 102 of the first sleeve 100. For example, a portion of the second sleeve 200 is inserted into the tubular chamber of the first sleeve 100, another portion of the second sleeve 200 is located outside the tubular chamber of the first sleeve 100. For example, the third opening 202 and a portion of the second sleeve 200 close to the third opening 202 are located outside the first sleeve 100.

For example, as shown in FIG. 1, a portion of the solenoid valve control part 104 close to the annular wall 102 is located within the first sleeve 100 and outside the second sleeve 200, and a portion of the solenoid valve control part 104 away from the annular wall 102 is located within the first sleeve 100 and also within the second sleeve 200.

As shown in FIG. 1, the first direction X is an axial direction of the first sleeve 100 or the second sleeve 200, and the first sleeve 100 and the second sleeve 200 are arranged in the first direction X. For example, the first direction X may be an extension direction of a center line axis L of the first sleeve 100 and the second sleeve 200.

As shown in FIG. 1, the housing 1041 is provided with a first passage 301 in communication with the accommodating chamber 1043, the coil holder 103 is provided with a second passage 302 in communication with the first passage 301, the first sleeve 100 is provided with a third passage 303 in communication with the second passage 302, and the first passage 301, the second passage 302, and the third passage 303 are sequentially connected to form an exhaust passage 30. For example, an end of the exhaust passage 30 is in communication with the accommodating chamber 1043 of the damper mechanism 01, and the other end of the exhaust passage 30 is in communication with the outside of the damper mechanism 01, thereby allowing gas within the accommodating chamber 1043 to be discharged to the outside of the damper mechanism 01.

For example, when the damper mechanism 01 is in operation, the damper mechanism 01 may be provided after rotating 90° clockwise in a state in FIG. 1, that is to say, the damper mechanism 01 may be provided in a vertical state, such that the first sleeve 100 is located at an upper part of the damper mechanism 01 and the second sleeve 200 is located at a lower part of the damper mechanism 01. Thus, when the hydraulic fluid in the damper mechanism 01 generates partial gas during operation, due to density differences, this partial gas tends to reside in or rise into the accommodating chamber 1043. Therefore, the overall movement of the partial gas within the damper mechanism 01 is upward (e.g., rising from the second sleeve 200 to the first sleeve 100).

According to the damper mechanism 01 provided by the embodiments of the present disclosure, the first passage 301 provided in the housing 1041, the second passage 302 provided in the coil holder 103, and the third passage 303 provided in the first sleeve 100 are sequentially connected to form the exhaust passage 30. This facilitates the discharge of gas from the accommodating chamber 1043 of the damper mechanism 01. The design of the exhaust passage 30 is aligned with the natural flow direction of the gas, resulting in relatively high exhaust efficiency and effectively improving the operational performance of the damper mechanism 01.

For example, as shown in FIG. 1, the accommodating chamber 1043 includes a sub-chamber located on a side of the valve armature 1044 away from the valve cover 1042, and the first passage 301 is in direct communication with this sub-chamber.

For example, as shown in FIG. 1, an end of the first passage 301 close to the valve armature 1044 is in communication with the sub-chamber of the accommodating chamber 1043 at a side away from the valve cover 1042 at a position M1, allowing gas in the accommodating chamber 1043 to flow into the first passage 301 and subsequently be discharged to the outside of the damper mechanism 01, although the configuration is not limited thereto.

For example, in the first direction X, the first passage 301, the second passage 302, and the third passage 303 are located on a side of the valve armature 1044 away from the valve cover 1042, thereby accommodating the gas flow trend within the damper mechanism 01 from the second sleeve 200 toward the first sleeve 100, and facilitating the discharge of gas located in or rising into the accommodating chamber 1043 through the exhaust passage 30.

For example, as shown in FIG. 1, the exhaust passage 30 further includes a retraction part 304, wherein an inner diameter of any one of the first passage 301, the second passage 302, and the third passage 303 is greater than an inner diameter of the retraction part 304.

With this configuration, while gas is exhausted to the outside of the damper mechanism 01 through the exhaust passage 30, the provision of the retraction part 304 helps reduce the amount of oil flowing out from the accommodating chamber 1043 to the outside of the damper mechanism 01 through the exhaust passage 30, thereby reducing the risk of a sudden pressure drop in the accommodating chamber 1043 and consequently minimizing a reduction in the damping force of the entire system.

For example, as shown in FIG. 1, the inner diameter of the retraction part 304 may be in a range from 0.25 mm to 0.35 mm; for example, the inner diameter of the retraction part 304 may be in a range at least one selected from the group consisting of from 0.26 mm to 0.30 mm, from 0.28 mm to 0.32 mm, from 0.27 mm to 0.33 mm, and from 0.30 mm to 0.35 mm.

For example, as shown in FIG. 1, the inner diameter of the retraction part 304 may be 1/7 to 1/4 of the inner diameter of any one of the first passage 301, the second passage 302, and the third passage 303; for example, the above ratios may be at least one selected from the group consisting of 1/6 to 1/4, 1/6 to 1/5, and 1/5 to 1/4, but are not limited thereto.

With this configuration, while gas is being discharged through the exhaust passage 30, the flow of oil from the accommodating chamber 1043 through the exhaust passage 30 can be controlled within an appropriate range, thereby improving exhaust efficiency while minimizing the risk of the reduction in system damping force.

For example, as shown in FIG. 1, the retraction part 304 may be located between the first passage 301 and the second passage 302, with an end of the retraction part 304 in communication with an end of the first passage 301 that is away from the solenoid valve control part 104, and the other of the retraction part 304 in communication with an end of the second passage 302 that is close to the solenoid valve control part 104. The inner diameter of the retraction part 304 is smaller than that of any one of the first passage 301, the second passage 302, and the third passage 303, but is not limited thereto.

For example, as shown in FIG. 1, the retraction part 304 may also be located between the second passage 302 and the third passage 303, with an end of the retraction part 304 in communication with the second passage 302 and the other end of the retraction part 304 in communication with the third passage 303, but is not limited thereto.

For example, in some embodiments of the present disclosure, any one of the first passage 301, the second passage 302, and the third passage 303 may include multiple sub-passages, and a retraction part 304, having the inner diameter smaller than that of each sub-passage, may be provided between adjacent sub-passages and in communication with the sub-passage, and the position of the retraction part 304 is not limited in the embodiments of the present disclosure.

For example, in some embodiments of the present disclosure, at least one selected from the group consisting of the first passage 301, the second passage 302, and the third passage 303 may include multiple sub-passages, such that multiple retraction parts 304 may be arranged within the exhaust passage 30, and the number of retraction parts 304 is not limited in the embodiments of the present disclosure.

For example, as shown in FIG. 1, the first passage 301 is located on a side of the valve armature 1044 that is away from the second sleeve 200, both the second passage 302 and the third passage 303 are located on a side of the electromagnetic coil 1045 that is away from the second sleeve 200.

For example, as shown in FIG. 1, the first passage 301 is provided in the housing 1041 and is located farther from the second sleeve 200 than the valve armature 1044, so that the first passage 301 can be located as close as possible to the annular wall 102 of the housing 1041. For example, both the second passage 302 and the third passage 303 are located farther from the second sleeve 200 than the electromagnetic coil 1045, so that both the second passage 302 and the third passage 303 are located as high as possible in the damper mechanism 01 (referring to the foregoing embodiment, the first sleeve 100 is located in the upper portion of the damper mechanism 01, and the second sleeve is located in the lower portion of the damper mechanism 01). With this configuration, it is advantageous in accommodating the tendency of the gas in the damper mechanism 01 to flow in a direction from bottom to top, thereby enabling the gas in the accommodating chamber 1043 to be discharged, and allowing the exhaust passage 30 to achieve high exhaust efficiency.

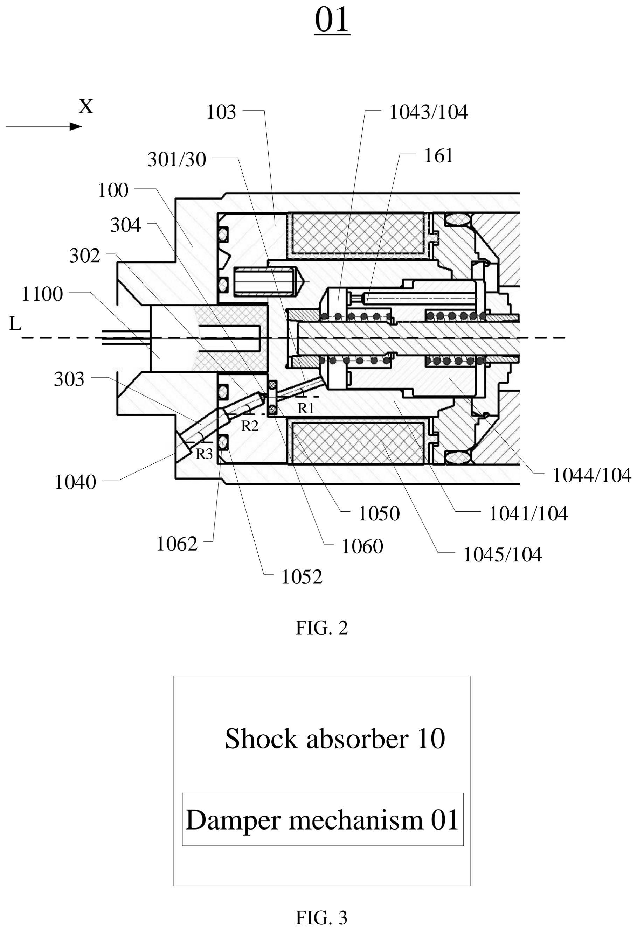

FIG. 2 is an enlarged partial schematic view of the damper mechanism shown in FIG. 1.

For example, as shown in FIG. 2, a first included angle R1 between a central axis of the first passage 301 and the first direction X is in a range of 20° to 65°. For example, a second included angle R2 between a central axis of the second passage 302 and the first direction X may be in a range of 5° to 90°. For example, a third included angle R3 between a central axis of the third passage 303 and the first direction X may be in a range of 5° to 90°. Thus, the exhaust passage 30 as a whole exhibits a gradually upward trend, which facilitates the discharge of gas from the accommodating chamber 1043 through the exhaust passage 30.

For example, as shown in FIG. 2, the first included angle R1 may be in a range of at least one selected from the group consisting of 25° to 60°, 30° to 35°, 40° to 55°, and 45° to 50°, but is not limited thereto. For example, the second included angle R2 may be in a range of at least one selected from the group consisting of 20° to 80°, 35° to 70°, 45° to 65°, and 50° to 60°, but is not limited thereto. For example, the third included angle R3 may be in a range of at least one selected from the group consisting of 20° to 80°, 35° to 70°, 45° to 65°, and 50° to 60°, but is not limited thereto. For example, the ranges of the first included angle R1, the second included angle R2, and the third included angle R3 may be set according to design requirements such as the spatial arrangement of respective components, and embodiments of the present disclosure are not limited thereto.

For example, as shown in FIGS. 1 and 2, the damper mechanism 01 may include a plurality of exhaust passages 30, and ports 1040 of the plurality of exhaust passages 30 that are away from the solenoid valve control part 104 are spaced apart on an outer wall of the first sleeve 100.

For example, the plurality of exhaust passages 30 may be arranged in a circumferential arrangement on the outer wall of the first sleeve 100, centered on the central axis L of the first sleeve 100, but are not limited thereto. For example, the inner diameter distribution of the plurality of exhaust passages 30, the angle of each exhaust passage 30 with respect to the first direction X, and the like may be set according to actual design requirements, and embodiments of the present disclosure are not limited thereto.

For example, a cross-section of any one of the first passage 301, the second passage 302, and the third passage 303 in a plane perpendicular to its extending direction may be any one of circular, elliptical, or polygonal, and embodiments of the present disclosure are not limited thereto.

For example, as shown in FIG. 2, a first sealing member 1060 is provided between the housing 1041 and the coil holder 103, and the first sealing member 1060 surrounds the first passage 301. For example, the configuration of the first sealing member 1060 can enhance the sealing performance between the housing 1041 and the coil holder 103, and can reduce the risk of leakage of partial oil flowing out of the first passage 301.

For example, the damper mechanism 01 further includes a central part 1100, and a central axis of the central part 1100 coincides with the central axis L of the first sleeve 100; the configuration of the first sealing member 1060 can reduce the risk of partial oil flowing out of the first passage 301 leaking into the electromagnetic coil 1045 or into the central part 1100, thereby improving the performance of the damper mechanism 01.

For example, as shown in FIG. 2, a second sealing member 1062 is provided between the coil holder 103 and the first sleeve 100, and the second sealing member 1062 surrounds the second passage 302. The configuration of the second sealing member 1062 can enhance the sealing performance between the coil holder 103 and the first sleeve 100; for example, it can reduce the risk of partial oil flowing out of the second passage 302 leaking into the electromagnetic coil 1045 or into the central part 1100, thereby improving the performance of the damper mechanism 01.

For example, the first sealing member 1060 and the second sealing member 1062 described above may be sealing rings, but are not limited thereto, as the embodiments of the present disclosure are not limited thereto.

For example, as shown in FIG. 2, at least one of surfaces of the housing 1041 and the coil holder 103 mutually adjacent to each other is provided with a first groove, and the first sealing member 1060 is located in the first groove. For example, a first groove may be provided on an outer wall of the housing 1041 away from the valve armature 1044 or on an inner wall of the coil holder 103 close to the first passage 301. For example, at least one of surfaces of the coil holder 103 and the first sleeve 100 second groove to each other is provided with a second groove, and the second sealing member 1062 is located in the second groove. For example, a second groove may be provided on an outer wall of the coil holder 103 away from the valve armature 1044 or on an inner wall of the first sleeve 100 close to the first passage 301, but is not limited thereto.

For example, as shown in FIG. 2, the embodiment of the present disclosure will be described by way of example, but not limitation, in which a first groove 1050 is provided on the outer wall of the housing 1041 that is away from the valve armature 1044, and a second groove 1052 is provided on the outer wall of the coil holder 103 that is away from the valve armature 1044; however, the positions of the first groove and the second groove may be set according to actual design requirements.

For example, as shown in FIG. 1, the damper mechanism 01 further includes a valve core assembly chamber 500 located within the second sleeve 200 and a valve core assembly 501 located within the valve core assembly chamber 500, the valve core assembly 501 is connected to the solenoid valve control part 104. The solenoid valve control part 104 further includes a rod body 502 penetrating through the valve armature 1044, the rod body 502 is configured to transmit a regulating force from the valve armature 1044 to the valve core assembly 501. For example, as shown in FIG. 1, the valve core assembly 501 is connected to the rod body 502, the rod body 502 penetrates through and is connected to the valve armature 1044; for example, under an action of the electromagnetic coil 1045, the valve armature 1044 can move together with the rod body 502 in the first direction X, so that the rod body 502 can apply a force to the valve core assembly 501.

For example, as shown in FIG. 1, the damper mechanism 01 may further include a movable valve core 701, a movable valve limiter 702, and a fixed valve core 703, an end of the valve core assembly 501 abuts against the movable valve core 701. For example, when a force from the rod body 502 is transmitted to the valve core assembly 501, the valve core assembly 501 transmits a regulating force to the movable valve core 701, thereby adjusting a distance between the movable valve core 701 and the movable valve limiter 702. For example, the damper mechanism 01 may further include a restoring valve, and the restoring valve is connected to a side of the second sleeve 200 away from the first sleeve 100, but is not limited thereto.

For example, as shown in FIG. 1, the valve armature 1044 includes an internal passage 10441 penetrating through the valve armature 1044 in the first direction X, the internal passage 10441 is in communication with the accommodating chamber 1043.

For example, as shown in FIG. 1, in the accommodating chamber 1043, the internal passage 10441 allows communication between a portion of the accommodating chamber 1043 close to the annular wall 102 and a portion of the accommodating chamber 1043 close to the second sleeve 200. As shown in FIG. 1, a portion of the rod body 502 located in the accommodating chamber 1043 is not in communication with the accommodating chamber 1043. In this configuration, oil can circulate between the portion of the accommodating chamber 1043 close to the annular wall 102 and the portion of the accommodating chamber 1043 close to the second sleeve 200 through the internal passage 10441, and gas can also move from the portion of the accommodating chamber 1043 close to the second sleeve 200 to the portion of the accommodating chamber 1043 close to the annular wall 102, and then be discharged through the exhaust passage 30 to the outside of the accommodating chamber 1043.

With this configuration, the structure located in the accommodating chamber 1043 can be simplified, a number of components arranged in the accommodating chamber 1043 can be reduced, and the movement mode of oil and gas in the accommodating chamber 1043 can be made relatively simple, so as to facilitate the control of the internal pressure of the accommodating chamber 1043, thereby facilitating the manipulation of the damping force of the damper mechanism 01 so as to enable the damper mechanism 01 to have good performance.

For example, as shown in FIG. 1, an end of the accommodating chamber 1043 away from the second sleeve 200 is provided with a guide sleeve 10431, at least a portion of the rod body 502 close to the annular wall 102 is located in the guide sleeve 10431, and the solenoid valve control part 104 further includes a first elastic element 161, the first elastic element 161 is located between the guide sleeve 10431 and the valve armature 1044.

For example, as shown in FIG. 1, a portion of the rod body 502 is located within the guide sleeve 10431, and the rod body 502 is movable relative to the guide sleeve 10431 in the first direction X. For example, the first elastic element 161 may include a spring, but is not limited thereto. For example, when the valve armature 1044 moves relative to the guide sleeve 10431 in the first direction X, the first elastic element 161 can provide a buffering effect on the movement of the valve armature 1044.

For example, as shown in FIG. 1, the housing 1041 further includes a limiting part 10411, which can block the valve armature 1044 when the first elastic element 161 is in a process of being continuously compressed. For example, when the valve armature 1044 is in contact with the limiting part 10411, the valve armature 1044 no longer moves in a direction approaching the annular wall 102, and at this time, an end of the valve armature 1044 close to the annular wall 102 does not contact an inner wall of the housing 1041 facing the second sleeve 200; that is, the accommodating chamber 1043 includes a sub-chamber located on a side of the valve armature 1044 away from the valve cover 1042 and in communication with the first passage 301, so as to facilitate the discharge of gas to the outside of the damper mechanism 01. For example, the limiting part 10411 is a stepped structure formed on an inner wall of the housing 1041. For example, an upper portion of the housing 1041 (the portion close to the annular wall 102) has a relatively small inner diameter, and a lower portion of the housing 1041 (the portion away from the annular wall 102) has a relatively large inner diameter, thereby forming a stepped structure between the two portions. In addition, an upper portion of the valve armature 1044 has a relatively small diameter and an lower portion has a relatively large diameter, so as to form another stepped structure therebetween. When the stepped structure of the housing 1041 (the limiting part 10411) is contact with the stepped structure of the valve armature 1044, the valve armature 1044 is restricted by the limiting part 10411 and cannot continue moving upward.

For example, as shown in FIG. 1, the damper mechanism 01 further includes an annular bracket 600, at least a portion of the annular bracket 600 is located at the periphery of the housing 1041 and the valve cover 1042, and a sealing ring 603 is provided between the outer periphery 601 of the annular bracket 600 and an inner sidewall of the first sleeve 100.

For example, as shown in FIG. 1, two sides of the annular bracket 600 abut against the housing 1041 and the valve cover 1042, respectively. At least a portion of the sealing ring 603 between the outer periphery 601 of the annular bracket 600 and the inner sidewall of the first sleeve 100 is closer to the annular wall 102 than the valve cover 1042.

For example, as shown in FIG. 1, at a side of the sealing ring 603 away from the annular wall 102, at least one annular portion of a part where the outer sidewall of the second sleeve 200 and the inner sidewall of the first sleeve 100 face each other is sealed, and a sidewall of the first sleeve 100 between the sealing ring 603 and the annular portion is closed.

For example, as shown in FIG. 1, the annular bracket 600 is located within the first sleeve 100. For example, a portion of the outer sidewall of the annular bracket 600 close to the annular wall 102 may be in contact with the inner sidewall of the first sleeve 100. For example, the sealing ring 603 is provided between an outer sidewall of a portion of the annular bracket 600 away from the annular wall 102 and the inner sidewall of the first sleeve 100.

For example, as shown in FIG. 1, the sealing arrangement of at least one annular portion A1 of a part where the outer sidewall of the second sleeve 200 and the inner sidewall of the first sleeve 100 face each other may refer to a region between the first sleeve 100 and the second sleeve 200 where an annular seal is arranged, which is located on a side of the sealing ring 603 away from the annular wall 102 and which does not act as an exhaust passage.

For example, as shown in FIG. 1, the closed arrangement of the sidewall of the first sleeve 100 between the sealing ring 603 and the annular portion A1 may mean that the sidewall of the first sleeve 100 between the sealing ring 603 and the annular portion A1 is not provided with a through-hole and the like which is a passage for communicating an inner space and an outer space of the first sleeve 100.

Thus, no passage communicating the inner space and the outer space of the first sleeve 100 is provided at a position where the first sleeve 100 and the second sleeve 200 are in contact with each other, which is advantageous for controlling the internal pressure of the damper mechanism 01, and when gas rises from the lower part to the upper portion of the damper mechanism 01, the gas can be discharged to the outside of the damper mechanism 01 through the exhaust passage 30.

At least one embodiment of the present disclosure further provides a shock absorber.

FIG. 3 is a schematic block diagram of a shock absorber according to an embodiment of the present disclosure. As shown in FIG. 3, the shock absorber 10 includes the above-mentioned damper mechanism 01. Thus, the shock absorber 10 facilitates discharging gas from the accommodating chamber in the damper mechanism 01, achieving high exhaust efficiency and good operational performance.

In some embodiments, the valve core assembly may also be referred to as a positioning valve core.

Generally, the damper mechanism may include a positioning valve core connected to a piston rod, and the piston rod may transmit a regulating force within the damper mechanism to the positioning valve core. During the assembly of the positioning valve core with the piston rod, gas may be generated between the positioning valve core and the piston rod; this gas may increase the air pressure between the positioning valve core and the piston rod, which is not conducive to the transmission of the regulating force between the positioning valve core and the piston rod, may lead to unstable operation of the positioning valve core within the damper mechanism, which is not conducive to the control of the damping force by the damper mechanism, and the existing positioning valve core has a complex structure, which is not conducive to assembly.

Therefore, there is an urgent need to propose a design that facilitates the discharge of gas between the positioning valve core and the piston rod in the damper mechanism and simplifies the structure of the positioning valve core, so as to improve the operating performance of the shock absorber.

Embodiments of the present disclosure further provide a positioning valve core for a damper mechanism, a damper mechanism, and a shock absorber.

The positioning valve core for a damper mechanism according to an embodiment of the present disclosure includes a positioning seat and a positioning valve plate, the positioning seat includes a main body part in disc shape and an extending part in column shape, the extending part is connected to a side of the main body part, and an axis of the main body part coincides with an axis of the extending part; the positioning seat further includes a fourth passage extending in a direction of the axis and penetrating through both the main body part and the extending part; the positioning valve plate is located on a side of the main body part away from the extending part, an edge portion of the positioning valve plate is in contact with the main body part, and a central portion of the positioning valve plate includes a first protruding part that bulges in a direction away from the extending part; a first chamber is provided between the positioning valve plate and the main body part; the main body part is provided a fifth passage, the fifth passage is in communication with the fourth passage via the first chamber or directly, and the fifth passage is in communication with the outside of the positioning valve core.

The positioning valve core for a damper mechanism provided by the present disclosure is configured with a fifth passage in communication with the outside of the positioning valve core, and the fifth passage is connected to the fourth passage either through the first chamber or directly. This configuration facilitates the discharge of gas between the positioning valve core and the component installed and matched with it to the outside of the positioning valve core through the fifth passage when the positioning valve core is installed and matched with the component in the damper mechanism, thereby achieving pressure equilibrium and facilitating assembly.

The positioning valve core for a damper mechanism, the damper mechanism, and the shock absorber provided by the embodiments of the present disclosure will be described below with reference to the accompanying drawings, so that the corresponding technical solutions can be made clearer and easier to understand.

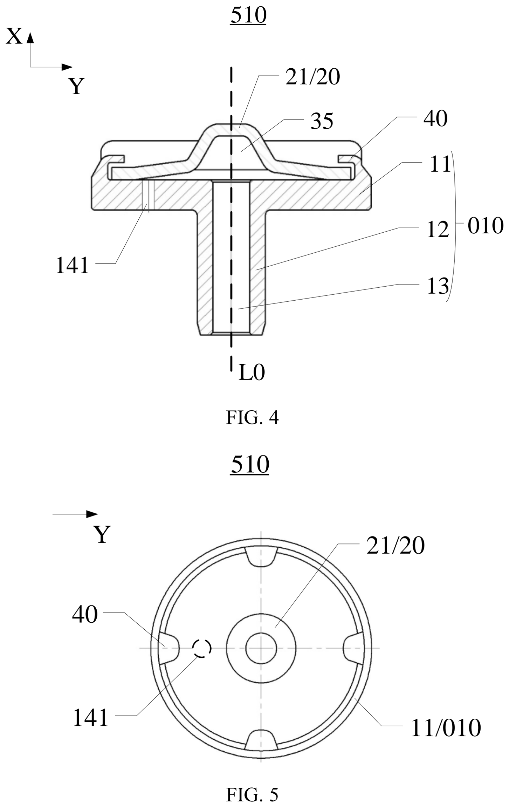

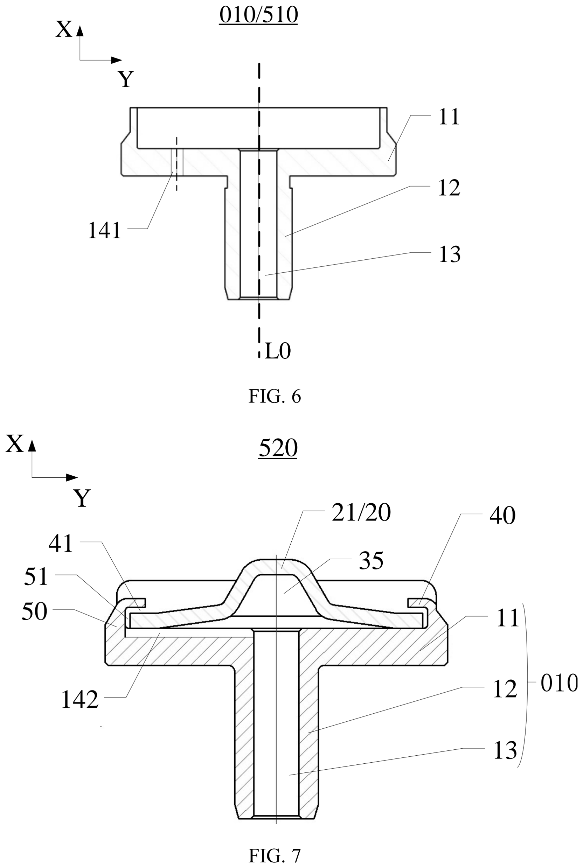

FIG. 4 is a schematic cross-sectional view of a positioning valve core for a damper mechanism provided by an embodiment of the present disclosure; FIG. 5 is a top view of the positioning valve core of FIG. 4; FIG. 6 is a schematic cross-sectional view of a positioning seat of the positioning valve core of FIG. 4.

As shown in FIG. 4, the positioning valve core 510 for a damper mechanism includes a positioning seat 010 and a positioning valve plate 20. The positioning seat 010 includes a main body part in disc shape 11 and an extending part in column shape 12, the extending part 12 is connected to a side of the main body part 11. The positioning seat 010 further includes a fourth passage 13 extending in a direction of the axis X and penetrating through the main body part 11 and the extending part 12.

For example, the extending part 12 may be made of a same material as the main body part 11 and integrally formed therewith, but is not limited thereto. An axis of the main body part 11 coincides with an axis of the extending part 12, and both are an axis L0 shown in FIG. 4, and an extending direction of the axis L0 defines the direction of the axis X. For example, the coincidence of the axis of the main body part 11 with the axis of the extending part 12 may include complete coincidence or substantial coincidence between the axis of the main body part 11 and the axis of the extending part 12.

As shown in FIG. 4, the positioning valve plate 20 is located on a side of the main body part 11 away from the extending part 12, and an edge portion of the positioning valve plate 20 is in contact with the main body part 11. A central portion of the positioning valve plate 20 includes a first protruding part 21 that bulges in a direction away from the extending part 12, and a first chamber 35 is provided between the positioning valve plate 20 and the main body part 11. A fifth passage 141 is provided in the main body part 11, the fifth passage 141 is in communication with the fourth passage 13 via the first chamber 35 or directly, and the fifth passage 141 is in communication with the outside of the positioning valve core 510.

As shown in FIG. 4, the first chamber 35 is in direct communication with the fourth passage 13, the fifth passage 141 is provided in the main body part 11, and an end of the fifth passage 141 close to the positioning valve plate 20 is in communication with the first chamber 35, so that the fourth passage 13 can communicate with the fifth passage 141 via the first chamber 35. Therefore, when the extending part 12 of the positioning valve core 510 is installed and matched with other component in the damper mechanism, gas between the positioning valve core 510 and the other component can enter the fourth passage 13, flow from a central portion to an edge of the first chamber 35, and finally be discharged to the outside of the positioning valve core 510 through the fifth passage 141.

For example, as will be described in greater detail below, in some embodiments of the present disclosure, the fifth passage may also be in direct communication with the fourth passage, thereby allowing gas entering the fourth passage to be directly discharged to the outside of the positioning valve core through the fifth passage.

For example, as shown in FIG. 4, the positioning valve plate 20 may be clamped to the main body part 11, and the positioning valve plate 20 may have a gap relative to the main body part 11 in the direction of the axis X and a gap relative to the main body part 11 in a radial direction Y of the main body part 11, to facilitate the movement of gas from the first chamber 35 into the fifth passage and then be discharged to the outside of the positioning valve core 510.

For example, as shown in FIG. 4, a cross-sectional shape of the fourth passage 13 and a cross-sectional shape of the fifth passage 141 may be one of a circle, an ellipse, or a polygon, but are not limited thereto, and the present disclosure is not limited thereto.

For example, as shown in FIGs. 4 and 5, a cross-sectional area of the fifth passage 141 is smaller than a cross-sectional area of the fourth passage 13. For example, an inner diameter of the fifth passage 141 may be 1/8-1/5 of an inner diameter of the fourth passage 13. For example, the inner diameter of the fifth passage 141 may be at least one of 1/7, 1/6, and 1/5 of the inner diameter of the fourth passage 13, but is not limited thereto, and the embodiments of the present disclosure are not limited thereto.

The positioning valve core for a damper mechanism provided by the present disclosure is configured with a fifth passage in communication with the outside of the positioning valve core, and the fifth passage is connected to the fourth passage either through the first chamber or directly. This configuration facilitates the discharge of gas between the positioning valve core and the component installed and matched with it to the outside of the positioning valve core through the fifth passage when the positioning valve core is installed and matched with the component in the damper mechanism, thereby achieving pressure equilibrium and facilitating assembly. In addition, the positioning valve core has a simple structure and contains a small number of components, which is advantageous in cost savings and process manufacturing.

For example, as shown in FIG. 4, in a direction from the central portion to the edge of the positioning valve plate 20, a distance between the positioning valve plate 20 and the main body part 11 in the direction of the axis X gradually decreases. For example, in the direction of the axis X, a distance between the first protruding part 21 of the positioning valve plate 20 and the main body part 11 is greater than a distance between the edge of the positioning valve plate 20 and the main body part 11.

For example, as shown in FIG. 4, when the positioning valve core 510 is installed and matched with the component of the damper mechanism, gas can enter through the fourth passage 13 into a portion of the first chamber 35 located between the first protruding part 21 and the main body part 11, where the gas can be buffered in this portion of the chamber, and then gradually flows to the fifth passage 141, and then is discharged to the outside of the positioning valve core 510. The shape and configuration of the positioning valve core 510 are designed to cooperate with the discharge function of the fifth passage 141, enabling control of gas flow pressure while facilitating smoother gas flow.

For example, as shown in FIGS. 4 and 6, the fifth passage 141 penetrates through the main body part 11 in a direction parallel to the direction of the axis X and is spaced apart from the fourth passage 13 in the radial direction Y, and a side of the main body part 11 away from the positioning valve plate 20 is in communication with the first chamber 35 via the fifth passage 141. For example, both an extension direction of the fifth passage 141 and an extension direction of the fourth passage 13 are the direction of the axis X, and the fifth passage 141 is spaced apart from the fourth passage 13 in the radial direction Y by a certain distance, so that the gas entering from the fourth passage 13 into the first chamber 35 has a flow path from the fourth passage 13 to the fifth passage 141, which can reduce the risk of clogging of the gas flow, so that the pressure of the gas flow in the first chamber 35 is in a relatively balanced state, facilitating the smooth discharge of the gas to the outside of the positioning valve core 510.

For example, as shown in FIGS. 4 and 6, a distance between the fourth passage 13 and the fifth passage 141 in the radial direction Y of the main body part 11 may be set according to design requirements. For example, in the radial direction Y of the main body part 11, a distance between the fifth passage 141 and the edge of the main body part 11 in the radial direction Y may be substantially equal to a distance between the fifth passage 141 and the axis L0, but is not limited thereto, and the present disclosure is not limited thereto.

For example, as shown in FIGS. 4 and 5, the main body part 11 includes fixing parts 40 arranged at intervals along its circumferential direction, and the fixing part 40 may be integrally formed with an edge portion of the main body part 11, for example. The positioning valve plate 20 may be clamped in an annular groove enclosed by a peripheral portion of the main body 11, an edge part of the peripheral portion of the main body 11 protruding away from the extending part 12 and the fixing part 40, but is not limited thereto. For example, the fixing part 40 may be e a portion of the edge part bent inward.

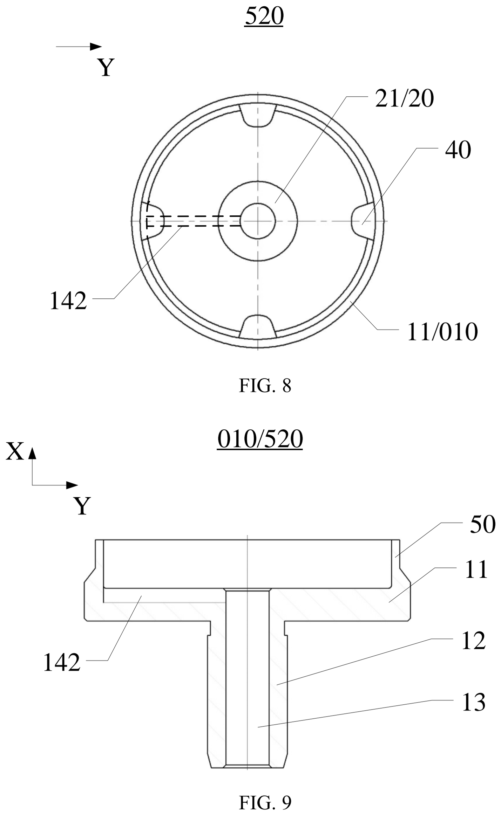

FIG. 7 is a schematic cross-sectional view of another positioning valve core for a damper mechanism according to an embodiment of the present disclosure; FIG. 8 is a top view of the positioning valve core of FIG. 7; FIG. 9 is a schematic cross-sectional view of a positioning seat of the positioning valve core of FIG. 7.

For example, as shown in FIG. 7, the positioning valve core 520 differs from the positioning valve core 510 in that the structure of the positioning seat in the positioning valve core 520 is different, while the remaining structures are the same or substantially the same.

Specifically, as shown in FIG. 7, in the positioning valve core 520, the positioning seat 010 includes a main body part in disc shape 11 and an extending part in column shape 12, the extending part 12 is connected to a side of the main body part 11. The positioning seat 010 further includes a fourth passage 13 extending in the direction of the axis X and penetrating through the main body part 11 and the extending part 12, the axis of the main body part 11 coincides with the axis of the extending part 12. A fifth passage is provided on the main body part 11, the fifth passage is in direct communication with the fourth passage 13 and is in communication with the outside of the positioning valve core 520.

For example, as shown in FIG. 7, the fifth passage may include a third groove 142 provided on a surface of the main body part 11 close to the first chamber 35, the third groove 142 extending in the radial direction Y of the main body part 11 and in communication with the fourth passage 13, at least an end of the third groove 142 away from the fourth passage 13 is in communication with the outside of the positioning seat 010.

For example, as shown in FIGS. 7 and 8, the end of the third groove 142 away from the fourth passage 13 may extend to an edge of the main body part 11 in the radial direction Y, thereby facilitating gas flow from the third groove 142 to the outside of the positioning valve core 520. For example, an end of the third groove 142 close to a central portion of the main body part 11 may extend to the fourth passage 13, thereby being in direct communication with both the first chamber 35 and the fourth passage 13. For example, the gas in the fourth passage 13 may flow into the third groove 142, then extend from the end of the third groove 142 close to the fourth passage 13 to the end close to the edge of the main body part 11 in the radial direction Y, and finally be discharged to the outside of the positioning valve core 520.

For example, as shown in FIGS. 7 and 9, the periphery of the main body part 11 includes an edge part 50 protruding in the direction of the axis X away from the extending part 12, and the end of the third groove 142 away from the fourth passage 13 is in communication with the outside of the positioning seat 010 through a gap 51 between the edge part 50 and the positioning valve plate 20. For example, the positioning valve plate 20 is gap-fitted with the edge part 50 of the main body part 11 in the radial direction Y, and the gas in the third groove 142 can flow into the gap 51 and then be discharged to the side of the positioning valve plate 20 that is away from the positioning seat 010.

For example, as shown in FIGS. 7 and 8, the main body part 11 includes fixing parts 40 arranged at intervals along its circumferential direction, and the fixing part 40 may be integrally formed with the edge portion of the main body part 11. The gap 41 between the fixing part 40 and a surface of the positioning valve plate 20 that faces the fixing part 40 and the gap 51 between the edge part 50 and the positioning valve plate 20 are in communication with each other, thereby allowing the gas in the third groove 142 to be discharged to the outside of the positioning valve core 520.

For example, as shown in FIGS. 7 and 8, a cross-sectional area of the fifth passage (i.e., the third groove 142) may be smaller than that of the fourth passage 13, thus enabling gas flow while facilitating manufacturing and ensuring the main body part 11 has sufficient structural strength.

For example, as shown in FIGS. 5 and 8, the positioning valve core provided by the present disclosure may include multiple fifth passages to improve the discharge efficiency of the gas from the fourth passage. For example, a number of multiple fifth passages may be set according to design requirements, such as 3 to 6, or 2 to 5, etc., but is not limited thereto. For example, the multiple fifth passages may be arranged at intervals along the circumferential direction of the main body part 11, and embodiments of the present disclosure are not limited thereto.

For example, as shown in FIGS. 6 and 8, other connection methods, such as riveting, welding, etc., may be used between the positioning valve plate 20 and the main body part 11, and the embodiments of the present disclosure are not limited thereto.

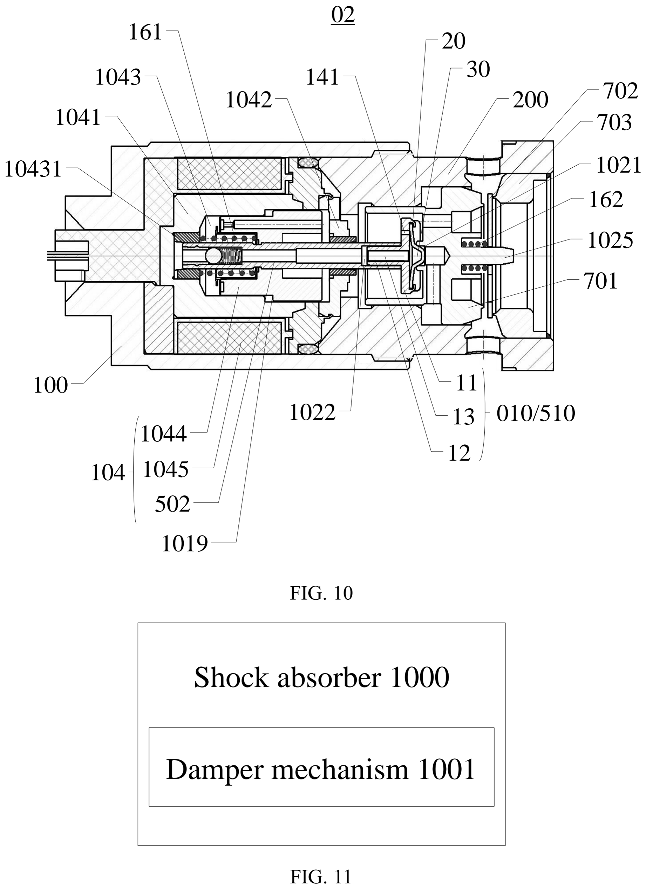

FIG. 10 is a schematic view of another damper mechanism provided by an embodiment of the present disclosure.

As shown in FIG. 10, embodiments of the present disclosure further provide a damper mechanism 02, the damper mechanism 02 includes the positioning valve core for a damper mechanism provided in any of the above embodiments, a solenoid valve control part 104 and a movable valve core 701. The solenoid valve control part 104 includes a valve armature 1044 and a rod body 502 penetrating through the valve armature 1044. An end of the positioning valve core 510 is connected to the rod body 502, and the movable valve core 701 is located on a side of the positioning valve core 510 away from the rod body 502. The positioning valve core 510 is configured to transmit a regulating force from the valve armature 1044 to the movable valve core 701 via the rod body 502.

In some embodiments, the main differences between the damper mechanism 02 and the damper mechanism 01 shown in FIG. 1 lie in the structure of the positioning valve core and the configuration of the elastic element. For example, the damper mechanism 02 may include the positioning valve core 510 shown in FIG. 4 or the positioning valve core 520 shown in FIG. 7, and the remaining structure may refer to the relevant descriptions in the above embodiments.

For example, as shown in FIG. 10, the damper mechanism 02 may include a first sleeve 100 and a second sleeve 200, and a portion of the second sleeve 200 extends into the first sleeve 100. The solenoid valve control part 104 further includes a housing 1041 and a valve cover 1042 both located within the first sleeve 100, the housing 1041 and the valve cover 1042 defining an accommodating chamber 1043, the valve armature 1044 is arranged in the accommodating chamber 1043 and configured to reciprocate along the direction of the axis of the rod body 502.

For example, as shown in FIG. 10, the damper mechanism 02 further includes an electromagnetic coil 1045, which is located between an outer sidewall of the housing 1041 and an inner sidewall of the first sleeve 100. The electromagnetic coil 1045 is configured to drive the valve armature 1044 to reciprocate along the axis direction of the rod body 502 within the accommodating chamber 1043.

For example, as shown in FIG. 10, in the axis direction of the rod body 502, the positioning valve core 510 is located between the rod body 502 and the movable valve core 701. During the process of installing and matching the extending part 12 of the positioning valve core 510 and the rod body 502, the gas between them may first flow into the fourth passage 13 of the positioning valve core 510, then enter the fifth passage 141 through the first chamber 35 between the positioning valve plate 20 and the main body part 11, and finally be discharged from a side of the fifth passage 141 away from the positioning valve plate 20.

Therefore, by employing the positioning valve core 510 in the damper mechanism 02, it is advantageous to discharge the gas between the extending part 12 of the positioning valve core 510 and the rod body 502 through the fifth passage 141 when the positioning valve core 510 is installed and matched with the rod body 502, thereby achieving pressure equilibrium, facilitating assembly. Moreover, due to the simple structure of the positioning valve core 510 and its reduced number of components, it is beneficial for cost savings and reducing manufacturing complexity.

For example, as shown in FIG. 10, the movable valve core 701 includes a first recess chamber 1021, at least a portion of the first protruding part 21 of the positioning valve plate 20 is located in the first recess chamber 1021. An end of the rod body 502 close to the movable valve core 701 includes a second recess chamber 1022, at least a portion of the extending part 12 of the positioning valve core 510 is located in the second recess chamber 1022. For example, a surface of the main body part 11 close to the extending part 12 abuts against the end of the rod body 502 close to the movable valve core 701, so that the extending part 12 is completely located within the second recess chamber 1022, but is not limited thereto. For example, in the axis direction of the rod body 502, a dimension of the second recess chamber 1022 is greater than that of the extending part 12, which facilitates installation and allows the gas between the rod body 502 and the extending part 12 to flow smoothly into the fourth passage 13.

For example, as shown in FIG. 10, an axis of the rod body 502, an axis of the extending part 12, and an axis of the movable valve core 701 are coincident, and such coincidence may include substantially coincident. With this configuration, the positioning valve core 510 can effectively transmit the regulating force from the rod body 502 in its axis direction to the movable valve core 701, thereby helping to improve the damping force control performance of the damper mechanism 02.

For example, as shown in FIG. 10, the damper mechanism 02 further includes a first limiting part 10431 located on a side of the valve armature 1044 away from the positioning valve core 510, a second limiting part 702 located on a side of the movable valve core 701 away from the positioning valve core 510, and a first elastic element 161 and a second elastic element 162, the first elastic element 161abuts against the first limiting part 10431 and the valve armature 1044, respectively, and the second elastic element 162 abuts against the second limiting part 702 and the movable valve core 701, respectively.

In some embodiments, the first limiting part may also be referred to as a guide sleeve, and the second limiting part may also be referred to as a movable valve limiter.

For example, as shown in FIG. 10, the first limiting part 10431 may be a portion of the housing 1041. For example, the first limiting part 10431 is located in the accommodating chamber 1043, and a portion of the rod body 502 is inserted into the first limiting part 10431. For example, the movable valve core 701 may include a second protruding part 1025, and the second limiting part 702 is sleeved on the second protruding part 1025. When the force from the rod body 502 is transmitted to the positioning valve core 510, the positioning valve core 510 can transmit a regulating force to the movable valve core 701, thereby adjusting a distance between the movable valve core 701 and the second limiting part 702.

For example, as shown in FIG. 10, as the distance between the movable valve core 701 and the second limiting part 702 continuously changes, the first elastic element 161 can cushion the relative movement between the valve armature 1044 and the first limiting part 10431, and the second elastic element 162 can cushion the relative movement between the second protruding part 1025 and the movable valve core 701, thereby facilitating the damper mechanism 02 in controlling the damping force and improving the performance of the damper mechanism 02.

For example, as shown in FIG. 10, the first elastic element 161 may be in a compressed state, and an accommodating chamber 1043 is provided between the first limiting part 10431 and the valve armature 1044. For example, when the electromagnetic coil 1045 is energized and a generated electromagnetic force is relatively large, the valve armature 1044 moves within the accommodating chamber 1043 in a direction close to the second sleeve 200, and, for example, the valve armature 1044 and the valve cover 1042 may come into contact at their facing surfaces.

For example, the housing 1041 further includes a limiting end 1019, and the limiting end 1019 may be a stepped structure. For example, when the electromagnetic coil 1045 is de-energized, the valve armature 1044 moves within the accommodating chamber 1043 in a direction away from the second sleeve 200; for example, the limiting end 1019 of the valve armature 1044 may abut against the housing 1041, and the first elastic element 161 can reduce the risk of the limiting end 1019 directly impacting the housing and thereby generating abnormal noise.

For example, as shown in FIG. 10, when the damper mechanism 02 is in operation, the damper mechanism 02 may be provided in a state rotated 90° clockwise from the orientation shown in FIG. 10, i.e., the damper mechanism 02 may be provided in a vertical orientation, the first sleeve 100 is located at an upper part of the damper mechanism 02 and the second sleeve 200 is located at a lower part of the damper mechanism 02; therefore, an elastic coefficient of the first elastic element 161 may be smaller than that of the second elastic element 162, so as to better control the movement of the valve armature 1044 within the accommodating chamber 1043.

For example, as shown in FIG. 10, in the direction of the axis of the extending part 12 of the positioning seat 010, no elastic element is provided between the valve armature 1044 and the positioning valve core 510. For example, no elastic element is provided between the valve armature 1044 and the valve cover 1042, but the present disclosure is not limited thereto.

As described above, the first elastic element 161 is provided to supply the valve armature 1044 with a supporting elastic force in the direction of the axis, and the second elastic element 162 is provided to supply the movable valve core 701 with a supporting elastic force the direction of the axis. Therefore, under conditions satisfying design requirements, no additional elastic element may be added between the valve armature 1044 and the positioning valve core 510, thereby simplifying the structure of the damper mechanism 02, facilitating installation, and reducing design costs.

For example, as shown in FIG. 10, the damper mechanism 02 may further include a fixed valve core 703 and a restoring valve (not shown), and the restoring valve is connected to a side of the second sleeve 200 away from the first sleeve 100, but the present disclosure is not limited thereto.

It should be noted that although FIG. 10 illustrates the damper mechanism 02 according to an embodiment of the present disclosure adopting the structure of the positioning valve core 510, the structure of the positioning valve core 520 in the above-mentioned embodiment or the structure of the positioning valve core described in any of the above-mentioned embodiments may also be adopted.

Embodiments of the present disclosure further provide a shock absorber 1000. FIG. 11 is a schematic diagram of another shock absorber provided according to an embodiment of the present disclosure. As shown in FIG. 11, the shock absorber 1000 includes a damper mechanism 1001, for example, the damper mechanism 1001 may be the damper mechanism 02 described in the foregoing embodiments. Accordingly, the shock absorber 1000 includes the above-mentioned positioning valve core for a damper mechanism, and thus the technical effects of the above-mentioned positioning valve core for a damper mechanism are also embodied in the shock absorber 1000, which will not be repeated herein.

The following points required to be explained:
(1) the drawings of the embodiments of the present disclosure only relate to the structures related to the embodiments of the present disclosure, and other structures can refer to the general design.
(2) without conflict, the embodiments of the present disclosure and the features in the embodiments may be combined with each other.

The above is only the specific embodiment of this disclosure, but the protection scope of the present disclosure is not limited thereto.

## Claims

1. A damper mechanism, comprising:
a first sleeve, comprising a first opening and an annular wall arranged opposite to the first opening;
a second sleeve, comprising a second opening and a third opening arranged opposite to each other, the second opening and a portion of the second sleeve close to the second opening extending through the first opening into the first sleeve;
a coil holder, located within the first sleeve;
a solenoid valve control part, located within the first sleeve and located on a side of the coil holder close to the first opening, wherein the solenoid valve control part comprises a housing, a valve cover, and a valve armature, the housing is located on a side of the valve cover facing the annular wall, the housing and the valve cover defines an accommodating chamber, the valve armature is arranged in the accommodating chamber and configured to reciprocate along a first direction within the accommodating chamber, the first direction is an axial direction of the first sleeve or the second sleeve;
wherein the housing is provided with a first passage in communication with the accommodating chamber, the coil holder is provided with a second passage in communication with the first passage, the first sleeve is provided with a third passage in communication with the second passage, and the first passage, the second passage, and the third passage are sequentially connected to form an exhaust passage.

2. The damper mechanism according to claim 1, wherein the accommodating chamber comprises a sub-chamber located on a side of the valve armature away from the valve cover, the first passage is in direct communication with the sub-chamber.

3. The damper mechanism according to claim 1 or 2, wherein in the first direction, the first passage, the second passage, and the third passage are located on a side of the valve armature away from the valve cover.

4. The damper mechanism according to any one of claims 1 to 3, wherein the exhaust passage further comprises a retraction part, and any one of an inner diameter of the first passage, an inner diameter of the second passage, and an inner diameter of the third passage is greater than an inner diameter of the retraction part.

5. The damper mechanism according to claim 4, wherein the inner diameter of the retraction part is in a range from 0.25 mm to 0.35 mm.

6. The damper mechanism according to claim 4 or 5, wherein the retraction part is located between the first passage and the second passage, an end of the retraction part is in communication with an end of the first passage away from the solenoid valve control part, and the other end of the retraction part is in communication with an end of the second passage close to the solenoid valve control part.

7. The damper mechanism according to any one of claims 1 to 6, further comprising an electromagnetic coil, wherein the electromagnetic coil is located between an outer sidewall of the housing and an inner sidewall of the first sleeve and configured to drive the valve armature to reciprocate along the first direction within the accommodating chamber;
wherein the first passage is located on a side of the valve armature away from the second sleeve, and both the second passage and the third passage are located on a side of the electromagnetic coil away from the second sleeve.

8. The damper mechanism according to any one of claims 1 to 7, wherein a first angle between a central axis of the first passage and the first direction is in a range from 20° to 65°; and/or
an angle between a central axis of the second passage and the first direction is in a range from 5° to 90°; and/or
an angle between a central axis of the third passage and the first direction is in a range from 5° to 90°.

9. The damper mechanism according to any one of claims 1 to 8, wherein the damper mechanism comprises a plurality of exhaust passages, and ports of the plurality of exhaust passages away from the solenoid valve control part are spaced apart on an outer wall of the first sleeve.

10. The damper mechanism according to any one of claims 1 to 9, wherein a first sealing member is arranged between the housing and the coil holder, and the first sealing member surrounds the first passage;
a second sealing member is arranged between the coil holder and the first sleeve, and the second sealing member surrounds the second passage.

11. The damper mechanism according to claim 10, wherein at least one of surfaces of the housing and the coil holder mutually adjacent to each other is provided with a first groove, and the first sealing member is located in the first groove;
at least one of surfaces of the coil holder and the first sleeve mutually adjacent to each other is provided with a second groove, and the second sealing member is located in the second groove.

12. The damper mechanism according to any one of claims 1 to 9, further comprising a valve core assembly chamber located within the second sleeve and a positioning valve core located within the valve core assembly chamber, wherein the positioning valve core is connected to the solenoid valve control part, the solenoid valve control part further comprises a rod body penetrating through the valve armature, the rod body is configured to transmit a regulating force from the valve armature to the positioning valve core,
wherein the valve armature comprises an internal passage, the internal passage penetrates through the valve armature in the first direction, and the internal passage is in communication with the accommodating chamber.

13. The damper mechanism according to claim 12, wherein a guide sleeve is arranged at an end of the accommodating chamber away from the second sleeve, at least a portion of the rod body close to the annular wall is located in the guide sleeve,
wherein the solenoid valve control part further comprises a first elastic element, the first elastic element is located between the guide sleeve and the valve armature.

14. The damper mechanism according to any one of claims 1 to 13, further comprising an annular bracket, wherein at least a portion of the annular bracket is located at the periphery of the housing and the valve cover, and a sealing ring is arranged between the outer periphery of the annular bracket and an inner sidewall of the first sleeve;
on a side of the sealing ring away from the annular wall, at least one annular portion of a part where an outer sidewall of the second sleeve and an inner sidewall of the first sleeve face each other is sealed, and a sidewall of the first sleeve between the sealing ring and the annular portion is closed.

15. The damper mechanism according to any one of claims 1 to 11, further comprising a positioning valve core and a movable valve core for the damper mechanism,
wherein the solenoid valve control part comprises a rod body penetrating through the valve armature, and an end of the positioning valve core is connected to the rod body;
the movable valve core is located on a side of the positioning valve core away from the rod body, and the positioning valve core is configured to transmit a regulating force from the valve armature to the movable valve core through the rod body.

16. The damper mechanism according to claim 15, wherein the positioning valve core comprises:
a positioning seat, comprising a main body part in disc shape and an extending part in column shape, wherein the extending part is connected to a side of the main body part, and an axis of the main body part coincides with an axis of the extending part, the positioning seat further comprises a fourth passage extending in a direction of the axis and penetrating through the main body part and the extending part;
a positioning valve plate, located on a side of the main body part away from the extending part, wherein an edge portion of the positioning valve plate is in contact with the main body part, and a central portion of the positioning valve plate comprises a first protruding part bulging in a direction away from the extending part, a first chamber is provided between the positioning valve plate and the main body part,
the main body part is provided with a fifth passage, and the fifth passage and the fourth passage are communicated through the first chamber or directly communicated, and the fifth passage is in communication with outside of the positioning valve core.

17. The damper mechanism according to claim 16, wherein a distance between the positioning valve plate and the main body part in the direction of the axis gradually decreases in a direction from the central portion to an edge of the positioning valve plate.

18. The damper mechanism according to claim 16 or 17, wherein the fifth passage penetrates through the main body part in a direction parallel to the direction of the axis and is spaced apart from the fourth passage in a radial direction of the main body part, and a side of the main body part away from the positioning valve plate is in communication with the first chamber through the fifth passage.

19. The damper mechanism according to claim 17, wherein the fifth passage comprises a third groove arranged on a surface of the main body part close to the first chamber, the third groove extends in a radial direction of the main body part and is in communication with the fourth passage,
at least an end of the third groove away from the fourth passage is in communication with outside of the positioning seat.

20. The damper mechanism according to claim 19, wherein the periphery of the main body part comprises an edge part protruding in a direction away from the extending part along the direction of the axis, and an end of the third groove away from the fourth passage is in communication with the outside of the positioning seat through a gap between the edge part and the positioning valve plate.

21. The damper mechanism according to any one of claims 16 to 20, wherein a cross-sectional area of the fifth passage is smaller than a cross-sectional area of the fourth passage.

22. The damper mechanism according to any one of claims 16 to 21, wherein the movable valve core comprises a first recess chamber, and at least a portion of the first protruding part of the positioning valve plate is located in the first recess chamber.

23. The damper mechanism according to any one of claims 16 to 22, wherein an end of the rod body close to the movable valve core comprises a second recess chamber, and at least a portion of the extending part of the positioning valve core is located in the second recess chamber.

24. The damper mechanism according to any one of claims 16 to 22, wherein an axis of the rod body, the axis of the extending part, and an axis of the movable valve core coincide.

25. The damper mechanism according to claim 24, further comprising:
a guide sleeve, located on a side of the valve armature away from the positioning valve core;
a movable valve limiter, located on a side of the movable valve core away from the positioning valve core;
a first elastic element, abutting against the guide sleeve and the valve armature, respectively; and
a second elastic element, abutting against the movable valve limiter and the movable valve core, respectively.

26. The damper mechanism according to claim 24, wherein no elastic element is arranged between the valve armature and the positioning valve core in the direction of the axis of the extending part of the positioning seat.

27. The damper mechanism according to claim 25 or 26, wherein an elastic coefficient of the first elastic element is smaller than an elastic coefficient of the second elastic element.

28. A shock absorber, comprising the damper mechanism according to any one of claims 1 to 27.

29. A positioning valve core for a damper mechanism, comprising:
a positioning seat, comprising a main body part in disc shape and an extending part in column shape, wherein the extending part is connected to a side of the main body part, and an axis of the main body part coincides with an axis of the extending part, the positioning seat further comprises a fourth passage extending in a direction of the axis and penetrating through the main body part and the extending part;
a positioning valve plate, located on a side of the main body part away from the extending part, wherein an edge portion of the positioning valve plate is in contact with the main body part, and a central portion of the positioning valve plate comprises a first protruding part bulging in a direction away from the extending part, a first chamber is provided between the positioning valve plate and the main body part,
the main body part is provided with a fifth passage, and the fifth passage and the fourth passage are communicated through the first chamber or directly communicated, and the fifth passage is in communication with outside of the positioning valve core.

30. The positioning valve core for a damper mechanism according to claim 29, wherein
a distance between the positioning valve plate and the main body part in the direction of the axis gradually decreases in the direction of the axis from the central portion to an edge of the positioning valve plate.

31. The positioning valve core for a damper mechanism according to claim 29 or 30, wherein the fifth passage penetrates through the main body part in a direction parallel to the direction of the axis and is spaced apart from the fourth passage in a radial direction of the main body part, and a side of the main body part away from the positioning valve plate is in communication with the first chamber through the fifth passage.

32. The positioning valve core for a damper mechanism according to claim 30, wherein the fifth passage comprises a third groove arranged on a surface of the main body part close to the first chamber, the third groove extends in a radial direction of the main body part and is in communication with the fourth passage,
at least an end of the third groove away from the fourth passage is in communication with outside of the positioning seat.

33. The positioning valve core for a damper mechanism according to claim 32, wherein the periphery of the main body part comprises an edge part protruding in a direction away from the extending part along the direction of the axis, and an end of the third groove away from the fourth passage is in communication with the outside of the positioning seat through a gap between the edge part and the positioning valve plate.

34. The positioning valve core for a damper mechanism according to any one of claims 29 to 33, wherein a cross-sectional area of the fifth passage is smaller than a cross-sectional area of the fourth passage.
